# EUROPÄISCHE PATENTSCHRIFT

(11) **EP 2 788 092 B1**
(45) Veröffentlichungstag und Bekanntmachung des Hinweises auf die Patenterteilung: **23.01.2019**
(21) Anmeldenummer: 12788420.3
(22) Anmeldetag: 20.10.2012
(51) Int. Cl.: G06K 9/00, G09B 19/00, A63B 69/00, A63B 71/06, A63B 63/00, A63B 24/00, A63B 71/00

(54) **ANORDNUNG ZUM TRAINING DES SCHUSSVERHALTENS EINES ELFMETERSCHÜTZEN**
APPARATUS FOR TRAINING THE BEHAVIOUR OF A KICKER DURING A PENALTY KICK
DISPOSITIF POUR ENTRAÎNER LE COMPORTEMENT D'UN TIREUR DURANT L'ÉXÉCUTION D'UN COUP DE PIED DE RÉPARATION

(30) Priorität: 08.12.2011 DE 102011120593
(43) Veröffentlichungstag der Anmeldung: 15.10.2014
(73) Patentinhaber: Universität Kassel, 34125 Kassel (DE)
(72) Erfinder: KIBELE, Armin, 34253 Lohfelden (DE)
(74) Vertreter: Patentanwälte Walther Hinz Bayer PartGmbB
(86) Internationale Anmeldenummer: PCT/DE2012/001020
(87) Internationale Veröffentlichungsnummer: WO 2013/083102

(56) Entgegenhaltungen:
- WO-A2-2012/072242
- DE-U1-202006 000 799
- DE-U1-202007 015 340
- JP-A- 2001 187 269
- JP-A- 2004 097 662

## Beschreibung

Die Erfindung betrifft eine Anordnung zum Training des Schussverhaltens eines Elfmeterschützen.

Aus der DE 20 2006 000 799 U1 ist bekannt den Auftreffpunkt eines Balles auf einer Torwand durch Berechnung der Flugbahn des Balls zu ermitteln, um dann den fiktiven Torwart auf der Torwand in Richtung des Balles zu bewegen. Die Bewegung des Torwarts auf der Torwand erfolgt in Abhängigkeit von der Flugbahn des Balles.

Auch die JP 2001-187269 A zeigt eine Vorrichtung mit der ganz ähnlich wie bei der DE 20 2006 000 799 U1 auch die Treffsicherheit eines Torschützen trainiert wird.

Die DE 20 2007 015 340 U1 beschreibt ein Verfahren zur Ermittlung der Qualität eines Torschusses eines Schützen hinsichtlich Stärke des Schusses und Art des Eintritts des Balles in das Tor. Auch ist aus dieser Literaturstelle bekannt, nach Abschuss des Balles eine Bildfolge, die der Reaktion eines Torwarts entspricht, auf einem Bilderzeuger zu initialisieren.

Beim Elfmeterschuss im Fußball ist die übliche Vorgehensweise des Elfmeterschützens derart, dass dieser mit Anlauf versucht, den Ball vom Elfmeterpunkt ins Tor zu befördern, möglichst in die Ecke, die der Torwart nicht antizipiert. Es hat sich herausgestellt, dass bei einem mit mittlerer Geschwindigkeit geschossenen Ball die Zeit, die der Ball vom Elfmeterpunkt bis in das Tor hinein benötigt kürzer ist, als die Zeit, die der Torwart benötigt, um von der Mitte des Tores in die Ecke des Tores zu gelangen, von der er annimmt, dass der Schütze den Ball schießen wird.

Es wurde in diesem Zusammenhang herausgefunden, dass in dem Moment, wo beispielsweise der linke Fuß sich neben dem Elfmeterpunkt, d. h., auch neben dem Ball befindet, das Schussbein sich in Ausholposition winklig zu dem Standbein befindet. Der Zeitraum für den Durchschwung des Schussbeines bis zum Ballkontakt beträgt etwa 80 bis 150 Millisekunden. Diese Zeitdauer ist abhängig von der Geschwindigkeit, mit der der Schütze das Schussbein durchzieht, und natürlich auch von dem Winkel des Schussbeins bei der Ausholbewegung, also letztlich dem Weg des Schussbeines. In jedem Fall ist es so, dass ein guter Elfmeterschütze noch in der Lage ist, während der Aushol- und Durchschwungbewegung des Schussbeines die Fußstellung durch Drehung um das Fußgelenk zu verändern. Das heißt, dass der Schütze während des Durchschwunges die Möglichkeit hat, dem Ball noch eine bestimmte Flugrichtung zu geben, und zwar in Abhängigkeit davon, in welche Richtung der Torwart sich im Tor bewegt. Dies vor dem Hintergrund, dass der Torwart seinen Bewegungsablauf früher einleiten muss, als der Schütze tatsächlich den Ball trifft, da die Zeit, die der Torwart benötigt um von der Mitte des Tores in die eine oder andere Ecke des Tores zu gelangen üblicherweise länger ist, als der Ball benötigt um vom Elfmeterpunkt ins Tor zu gelangen.

Gegenstand der Erfindung ist nun die Einübung dieser Interaktion von Torhüter und Elfmeterschützen unter kontrollierten Bedingungen, die für einen zielgerichteten perzeptuell-motorischen Lernprozess erforderlich sind. Das heißt, rein praktisch soll geübt werden, dass der Schütze im Durchschwung des Schussbeines in Abhängigkeit von der Bewegungsrichtung des Torwarts durch Drehung des Fußes um das Fußgelenk dem Ball quasi im letzten Moment noch eine andere Richtung geben kann.

Eine Anordnung zum Training des Schussverhaltens des Elfmeterschützen in diesem Sinne umfasst nach der Erfindung eine Visualisierungseinrichtung zur Darstellung des Bewegungsablaufs eines Torwarts in einem Tor, wobei die Anordnung eine Rechnereinheit umfasst, die einerseits mit der Visualisierungseinrichtung und andererseits mit einer Auslöseeinrichtung jeweils Daten übertragend in Verbindung steht, wobei durch die Auslöseeinrichtung bei Aktivierung durch den Schützen ein Signal an die Rechnereinheit übermittelt wird, wobei durch die Rechnereinheit der Bewegungsablauf des Torschützen auf der Visualisierungseinrichtung initialisiert wird, wobei der Bewegungsablauf des Torschützen auf der Visualisierungseinrichtung innerhalb des Zeitraums gestartet wird, den das Schussbein von der ausgeholten Stellung bis zum Auftreffen des Fußes auf den Ball benötigt. Das heißt, der Trainingsvorgang stellt sich wie folgt dar:

Der Elfmeterschütze läuft an, gelangt mit dem einen Bein, im Folgenden "Standbein" genannt, neben den Ball, der sich auf dem Elfmeterpunkt befindet, wobei in dem Moment das Schussbein sich in ausgeholter Stellung befindet, um dann innerhalb eines relativ kurzen Zeitraums von 80 bis 150 Millisekunden den Ball zu treffen. Innerhalb des Zeitraums, den das Schussbein von der ausgeholten Stellung bis zum Auftreffen des Fußes auf den Ball benötigt (80-150 Millisekunden), wird der Bewegungsablauf des Torschützen auf der Visualisierungseinrichtung gestartet. Innerhalb des Zeitraums des Durchschwunges des Beines von der ausgeholten Endstellung bis zum Auftreffen des Fußes auf den Ball soll der Schütze üben in Abhängigkeit von der Bewegungsrichtung des Torwarts die Stellung des Fußes zu verändern, mit dem Ziel den Ball genau in die Ecke des Tores zu befördern, in die sich der Torwart nicht bewegt.

Vorteilhafte Merkmale und Ausgestaltungen zu der Erfindung ergeben sich aus den Unteransprüchen.

So ist nach einem besonders vorteilhaften Merkmal vorgesehen, dass die Rechnereinheit ein einstellbares Verzögerungsglied aufweist, um die Initialisierung des Bewegungsablaufes des Torwarts zeitlich verzögert erfolgen zu lassen. Es wurde bereits an anderer Stelle dargelegt, dass die Dauer vom Beginn der Durchschwungbewegung des Schussbeins bis zum Auftreffen des Fußes auf den Ball zwischen etwa 80 und 150 Millisekunden beträgt. Im besten Fall hätte somit der Schütze 150 Millisekunden Zeit, um eine entsprechende Korrektur des Fußes des Schussbeines vorzunehmen. Zur Erzielung eines Trainingseffektes hat sich jedoch herausgestellt, dass es sinnvoll ist, diese Zeit variabel zu gestalten, d. h., insbesondere zu verkürzen, d. h., den Schützen in die Lage zu versetzen in immer kürzeren Zeiträumen die Lage des Fußes zu verändern. Das heißt, dass der Bewegungsablauf des Torwarts um einen Zeitraum Δ t beginnend mit der Durchschwungbewegung des Schussbeines versetzt auf der Visualisierungseinrichtung initialisiert wird.

Nach einem weiteren Merkmal der Erfindung ist vorgesehen, dass die Visualisierungseinrichtung als LED-Bildschirm oder als ein Beamer mit einer Projektionseinrichtung ausgebildet ist. Um Beschädigungen an dem LED-Bildschirm bzw. auch an der Leinwand als die die Projektionseinrichtung ausgebildet sein kann zu verhindern, ist der LED-Bildschirm bzw. auch die Projektionsfläche, insbesondere in Form einer Leinwand durch eine durchsichtige Scheibe abgedeckt. Die Scheibe kann hierbei aus einem Kunststoff oder auch aus einem Sicherheitsglas bestehen.

Die Auslöseeinrichtung kann entweder als Lichtschranke oder als elektronische Kontaktmatte ausgebildet sein. Bei einer Auslöseeinrichtung als Lichtschranke wird bei der Anordnung und Ausrichtung der Lichtschranke so vorgegangen, dass die Lichtschranke in der Höhe des Elfmeterpunktes postiert wird, d. h., dass die Lichtschranke ein Signal an die Rechnereinheit dann sendet, wenn sich das Standbein des Schützen in etwa neben dem Ball auf dem Elfmeterpunkt befindet. In gleicher Weise wird vorgegangen, wenn die Auslöseeinrichtung als elektronische Kontaktmatte ausgebildet ist. Auch hier befindet sich die Kontaktmatte unmittelbar neben dem Elfmeterpunkt, sodass bei Auftreffen des Standfußes auf die Kontaktmatte das entsprechende Signal an die Rechnereinheit übermittelt wird. Wird die Lichtschranke oder die Kontaktmatte in Schussrichtung gesehen, vor dem Ball positioniert, dann besteht die Möglichkeit, dem Schützen mehr Zeit zur Verfügung zu stellen. Der Bewegungsablauf des Torwarts ist vorzugsweise als Videopräsentation, z. B. in Form eines Videoclips in der Rechnereinheit oder der Visualisierungseinrichtung hinterlegt. Das heißt, dass der Schütze ganz real einen Torwart auf der Visualisierungseinrichtung erkennt, der sich von der Mitte des Tores auf die ein oder die andere Ecke zu bewegt.

In diesem Zusammenhang ist auch denkbar, den Kontaktpunkt des Balls auf der Scheibe vor dem z. B. LED-Bildschirm durch Richtungssensoren zu erfassen, um im Nachhinein durch Koppelung des Kontaktpunktes mit dem Videopunkt im Nachhinein eine visuelle Information als Standbild dem Schützen zur Verfügung zu stellen, damit dieser erkennen kann, wo sich der Torhüter zum Zeitpunkt des Ballkontaktes befunden hat.

Anhand der Zeichnungen soll die Erfindung nachstehend beispielhaft näher erläutert werden.
- Fig. 1: zeigt die schematisch die Anordnung zum Training des Schützen;
- Fig. 2: zeigt den Schützen unmittelbar vor dem Abschuss des Balles.

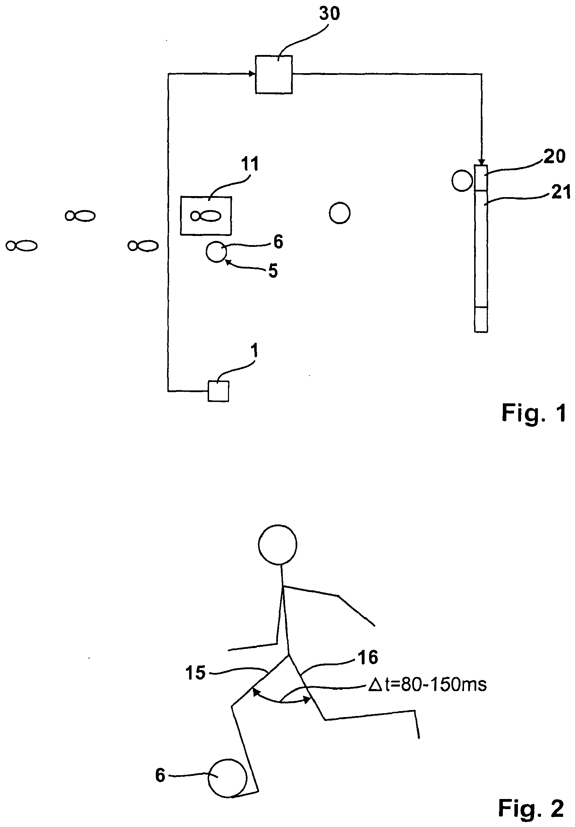

Aus Fig. 1 ist schematisch als Auslöseeinrichtung entweder eine Lichtschranke 1 oder eine Kontaktmatte 11 vorgesehen. Neben der Lichtschranke 1 bzw. auch neben der Kontaktmatte 11 befindet sich der mit 5 bezeichnete Elfmeterpunkt. Auf dem Elfmeterpunkt befindet sich der Ball 6. Im Abstand von genau 11 Metern zu dem Elfmeterpunkt 6 befindet sich die Visualisierungseinrichtung 20, beispielsweise in Form eines LED-Bildschirms in der realen Größe eines Tores. Der Bildschirm 20 ist zur Vermeidung von Beschädigungen durch das Auftreffen des Balles durch eine Glasscheibe 21 geschützt, die beabstandet zum Bildschirm vor dem Bildschirm angeordnet ist. Sowohl die Kontaktmatte als auch alternativ die Lichtschranke sind mit einer Rechnereinheit 30 Daten übertragend verbunden, wobei die Rechnereinheit ebenfalls Daten übertragend mit dem Bildschirm 20 in Verbindung steht. In der Rechnereinheit 30 hinterlegt sind eine Videopräsentation oder auch Videoclip über die Bewegung eines Torwarts bei einem Elfmeterschuss, so wie er in der Realität vorgefallen ist.

Die Arbeitsweise der in Fig. 1 dargestellten Anordnung stellt sich somit wie folgt dar:
Der Elfmeterschütze läuft an, gekennzeichnet durch die Fußabdrücke vor dem Elfmeterpunkt. In dem Moment, wo das Standbein sich neben dem Elfmeterpunkt befindet, also entweder auf der Kontaktmatte 11 aufsteht, oder die Lichtschranke 1 aktiviert hat, erfolgt ein Signal an die Rechnereinheit 30. Durch die Rechnereinheit 30 wird nunmehr der Bewegungsablauf auf dem Bildschirm 20 aktiviert. Die Aktivierung kann hierbei auch zeitverzögert ablaufen, d. h., dass nicht unmittelbar bei Auftreffen des Standfußes auf z. B. der Kontaktmatte der Videoclip aktiviert wird, sondern mit einer zeitlichen Verzögerung von beispielsweise 20 oder 30 Millisekunden, um den Schützen zu animieren in immer kürzeren Zeitabständen die Ausrichtung des Fußes während des Durchschwungs zu verändern, um den Ball in die Ecke des Tores zu bewegen, in die sich der Torwart gerade nicht bewegt.

In diesem Zusammenhang wird auf Fig. 2 verwiesen, die schematisch den Torschützen zeigt, wobei sich aus der Winkelstellung des Schussbeines 15 zum Standbein 16 und der Geschwindigkeit der Durchschwungbewegung des Schussbeines von der ausgestellten Endstellung bis zum Auftreffen auf den Ball 6 eine Zeitdauer von etwa 80 bis 150 Millisekunden ergibt. Es hat sich herausgestellt, dass bis zu etwa 2/3 der Durchschwungbewegung der Schütze noch in der Lage ist, die Fußstellung zu korrigieren. Das heißt, geht man von 150 Millisekunden für die Zeitdauer für den Durchschwung des Schussbeines aus, so ist der Schütze noch in der Lage innerhalb der ersten 100 Millisekunden Veränderungen in der Stellung des Fußes vorzunehmen. Dieser Zeitraum kann durch den Einsatz des Verzögerungsgliedes verkürzt werden, beispielsweise auf 80 Millisekunden.

### Bezugszeichenliste:

- 1: Lichtschranke
- 5: Elfmeterpunkt
- 6: Ball
- 11: elektronische Kontaktmatte
- 15: Schussbein
- 16: Standbein
- 20: Visualisierungseinrichtung
- 21: Glasscheibe
- 30: Rechnereinheit

## Patentansprüche

1. Anordnung zum Training des Schussverhaltens eines Elfmeterschützen, umfassend eine Visualisierungseinrichtung (20) zur Darstellung des Bewegungsablaufs eines Torwarts im Tor, wobei die Anordnung eine Rechnereinheit (30) umfasst, die einerseits mit der Visualisierungseinrichtung (20) und andererseits mit einer Auslöseeinrichtung datenübertragend in Verbindung steht, wobei durch die Auslöseeinrichtung bei Aktivierung durch den Schützen ein Signal an die Rechnereinheit übermittelt wird, wobei durch die Rechnereinheit der Bewegungsablauf auf der Visualisierungseinrichtung (20) initialisiert wird, wobei der Bewegungsablauf des Torschützen auf der Visualisierungseinrichtung innerhalb des Zeitraums gestartet wird, den das Schussbein von der ausgeholten Stellung bis zum Auftreffen des Fußes auf den Ball benötigt.

2. Anordnung nach Anspruch 1,
**dadurch gekennzeichnet,**
**dass** die Rechnereinheit (30) ein einstellbares Verzögerungsglied aufweist, um die Initialisierung des Bewegungsablaufes zeitlich verzögert erfolgen zu lassen.

3. Anordnung nach Anspruch 1 oder 2,
**dadurch gekennzeichnet,**
**dass** die Visualisierungseinrichtung (20) als LED-Bildschirm ausgebildet ist.

4. Anordnung nach Anspruch 1 oder 2,
**dadurch gekennzeichnet,**
**dass** die Visualisierungseinrichtung (20) als Beamer mit Projektionsfläche ausgebildet ist.

5. Anordnung nach Anspruch 3 oder 4,
**dadurch gekennzeichnet,**
**dass** der LED-Bildschirm oder die Projektionsfläche, z. B. eine Leinwand, durch eine durchsichtige Scheibe (21) abgedeckt ist.

6. Anordnung nach einem der voranstehenden Ansprüche,
**dadurch gekennzeichnet,**
**dass** die Auslöseeinrichtung als Lichtschranke (1) ausgebildet ist.

7. Anordnung nach einem der voranstehenden Ansprüche 1 bis 5,
**dadurch gekennzeichnet,**
**dass** die Auslöseeinrichtung als elektrische Kontaktmatte (11) ausgebildet ist.

8. Anordnung nach einem der voranstehenden Ansprüche,
**dadurch gekennzeichnet,**
**dass** der Bewegungsablauf des Torwarts als Videopräsentation in der Rechnereinheit (30) oder der Visualisierungseinrichtung (20) hinterlegt ist.

## Claims

1. An apparatus for training the behavior of a kicker during a penalty kick, comprising a visualization device (20) for displaying the sequence of movements of a goal keeper in the goal, wherein the apparatus comprises a computer unit (30), which is connected on the one hand with the visualization device (20) and on the other hand with an actuation device for transferring data, wherein when the actuation device is actuated by the kicker, a signal is transmitted to the computer unit by the actuation device, wherein the sequence of movements is initialized on the visualization device (20) by the computer unit, wherein the sequence of movements of the kicker on the visualization unit is started within a time period necessary for the kicking leg to move from its backward position to where the foot hits the ball.

2. The apparatus according to claim 1,
**characterized in that**
the computer unit (30) comprises an adjustable delay element, in order to delay the initialization of the sequence of movements.

3. The apparatus according to claim 1 or 2,
**characterized in that**
the visualization device (20) is designed as an LED screen.

4. The apparatus according to claim 1 or 2,
**characterized in that**
the visualization device (20) is designed as a projector with a projection screen.

5. The apparatus according to claim 3 or 4,
**characterized in that**
the LED screen or the projection screen, e.g. a canvas, is covered by a transparent pane (21).

6. The apparatus according to one of the afore-mentioned claims,
**characterized in that**
the actuation device is designed as a photoelectric sensor (1).

7. The apparatus according to one of the afore-mentioned claims 1 to 5,
**characterized in that**
the actuation device is designed as an electrical contact mat (11).

8. The apparatus according to one of the afore-mentioned claims,
**characterized in that**
the sequence of movements of the goalkeeper is stored as a video presentation in the computer unit (30) or in the visualization device (20).

## Revendications

1. Dispositif pour entraîner le comportement d'un tireur durant l'exécution d'un coup de pied de réparation, comportant un équipement de visualisation (20) pour représenter une séquence de mouvements d'un gardien de but dans le but, où le dispositif comprend une unité de traitement (30) reliée, en vue d'une transmission de données, d'une part à l'équipement de visualisation (20) et d'autre part à un équipement de déclenchement, où, à la suite d'une activation par le tireur, l'équipement de déclenchement transmet un signal à l'unité de traitement, où la séquence de mouvements est initialisée sur l'équipement de visualisation (20) par l'unité de traitement, où la séquence de mouvements du tireur sur l'équipement de visualisation est démarrée dans la période de temps nécessaire à la jambe de tir pour passer de sa position d'élan à la position dans laquelle le pied percute le ballon.

2. Dispositif selon la revendication 1,
**caractérisé en ce que**
l'unité de traitement (30) comporte un élément retardateur pour retarder l'initialisation de la séquence de mouvements.

3. Dispositif selon la revendication 1 ou 2,
**caractérisé en ce que**
l'équipement de visualisation (20) prend la forme d'un écran LED.

4. Dispositif selon la revendication 1 ou 2,
**caractérisé en ce que**
l'équipement de visualisation (20) prend la forme d'un projecteur avec un écran de projection.

5. Dispositif selon la revendication 3 ou 4,
**caractérisé en ce que**
l'écran LED ou l'écran de projection, par exemple une toile, est recouvert par une plaque transparente (21).

6. Dispositif selon l'une quelconque des revendications précédentes,
**caractérisé en ce que**
l'équipement de déclenchement prend la forme d'une barrière photoélectrique (1).

7. Dispositif selon l'une quelconque des revendications précédentes 1 à 5,
**caractérisé en ce que**
l'équipement de déclenchement prend la forme d'un tapis de contact électrique (11).

8. Dispositif selon l'une quelconque des revendications précédentes,
**caractérisé en ce que**
la séquence de mouvements du gardien de but est stockée sous forme de présentation vidéo dans l'unité de traitement (30) ou dans l'équipement de visualisation (20).
